# EUROPÄISCHE PATENTSCHRIFT

(11) **EP 1 261 816 B1**
(45) Veröffentlichungstag und Bekanntmachung des Hinweises auf die Patenterteilung: **20.08.2003**
(21) Anmeldenummer: 01919327.5
(22) Anmeldetag: 22.02.2001
(51) Int. Cl.: F16H 49/00, F16H 25/06

(54) **WELLGETRIEBE**
HARMONIC DRIVE
REDUCTEUR A PLANETAIRE

(30) Priorität: 04.03.2000 DE 10012601
(43) Veröffentlichungstag der Anmeldung: 04.12.2002
(73) Patentinhaber: Oechsler Aktiengesellschaft, 91522 Ansbach (DE)
(72) Erfinder: RUTTOR, Martin, 91522 Ansbach (DE); WOLF, Wilhelm, 91580 Petersaurach (DE)
(86) Internationale Anmeldenummer: EP0102026
(87) Internationale Veröffentlichungsnummer: WO01066975

(56) Entgegenhaltungen:
- EP-A- 0 974 773
- DE-A- 19 912 761

## Beschreibung

Die Erfindung betrifft ein Wellgetriebe gemäß dem Oberbegriff des Patentanspruches 1, wie es aus der unten näher erörterten DE 199 12 761 A1 bekannt ist.

Die Funktion eines - auch als Harmonic Drive oder als Ringband-Getriebe bekannten - Wellgetriebes als sehr stark untersetzendem, selbsthemmendem System mit zur Antriebswelle koaxialer Abtriebswelle beruht darauf, daß ein rotierender sogenannter Well-Generator einen auch als Flexband bezeichneten Reifen umlaufend radial verformt und dadurch dessen Felge, also Außenmantelfläche umlaufend lokal nach außen gegen die Innenmantelfläche geringfügig größeren Umfanges eines stationären, formstabilen Stützrings andrückt. Infolgedessen wälzt sich das Innenrad selbst oder sein darauf verdrehbar gelagerter Radreifen kraftschlüssig über Reibflächen oder formschlüssig über Verzahnungen im Stützring ab, wobei das Rad bzw. sein Reifen sich nach Maßgabe der Umfangsdifferenz langsamer als der motorisch angetriebene Triebkern des Wellgenerators dreht. Diese gegenüber dem Antrieb stark verlangsamte Drehbewegung wird vorzugsweise über die Außenverzahnung des Reifens auf die Innenverzahnung eines weiteren Außenringes, des zum Stützring konzentrischen aber nicht stationären Abtriebsringes übertragen, wobei noch eine weitere Untersetzung der Drehgeschwindigkeit infolge unterschiedlichen Umfanges (Zähnezahl) erfolgen kann. Der Antrieb des Well-Generators erfolgt üblicherweise über einen koaxial angeflanschten hochtourigen und deshalb sehr preisgünstig verfügbaren Kleinspannungs-Gleichstrommotor, dessen Rotation so in eine sehr viel langsamere Drehbewegung entsprechend größeren Drehmomentes untersetzt wird.

Bei den vom Deutschen Gebrauchsmuster 2 96 14 738 bekannten und in dem Beitrag "Genial einfach" von H. Hirn (KEM Antriebstechnik Heft 11/1996) näher beschriebenen Ausführungsformen solcher Wellgetriebe wird als Wellgenerator z.B. ein unrunder (im Axial-Querschnitt etwa dreieckförmiger oder bevorzugt ovaler) Triebkern konzentrisch in der Nabe eines radial verformbaren Innenrades gedreht. Formstabile Speichen zwischen der radial verformbaren Nabe und dem ebenfalls radial verformbaren, außen verzahnten Felgenreifen dieses Innenrades bewirken, daß die Außenverzahnung entsprechend ihrer umlaufenden radialen Verformung jeweils nur über ein begrenztes Bogenstück mit der Innenverzahnung des abstützenden Stützringes in Eingriff gerät. Statt des gegenüber dem stationären, äußeren Stützring, und relativ zum Triebkern gegensinnig, drehenden Innenrades aus Nabe, Speichen und außen verzahntem Reifen kann gemäß dem zitierten Gebrauchsmuster auch vorgesehen sein, einzelne pilz- oder T-förmige Stößel mit ihren Schäften in Kanälen eines stationären Käfigs bezüglich der Achse des Wellgenerators radial verschiebbar zu führen. Die umlaufende Radialverlagerung des Abwälzvorganges im Stützring erfolgt dann dadurch, daß die Füße der Stößel unter elastischer Vorspannung auf der unrunden Außenmantelfläche des Triebkernes ruhen, der in einer koaxialen Zentralbohrung des Käfigs motorisch angetrieben rotiert. Über die in peripherer oder Umfangs-Richtung, also tangential verbreiterten Köpfe der Stößel verläuft als Radreifen das Flexband, dessen Außenverzahnung durch die Folge der radial nach außen verlagerten Stößel wieder lokal umlaufend nach außen verformt wird, um dadurch im Stützring abzuwälzen.

So wird in solch einem Wellgetriebe die sehr hohe Drehzahl einer Eingangswelle in die dagegen sehr niedrige Drehzahl entsprechend höheren Drehmomentes einer koaxial zur Eingangswelle orientierten Ausgangswelle umgesetzt. Zur Verringerung der wärmeerzeugenden Reibung zwischen der Paarung der relativ zueinander rotierenden Kunststoff-Mantelflächen von einerseits dem Triebkern und andererseits der Innenrad-Nabe oder der Folge von Stößel-Füßen ist nach dieser gattungsbildenden Vorveröffentlichung ein Gleitlager in Form einer metallenen Manschette eingefügt, die sich unter Einfluß des darin verdrehten exzentrischen Triebkernes ebenfalls umlaufend exzentrisch verformt. Diese zwischengefügte Gleitlagerung verteilt die Relativdrehung zwischen Triebkern und Innenrad auf zwei Stufen und führt im übrigen schon aufgrund der allgemein günstigeren Reibungsverhältnisse von Kunststoff gegenüber Metall zu einer Verringerung der Reibungsverluste, also auch der verlustbedingten Erwärmung innerhalb des praktisch vollständig aus Kunststoff-Spritzgußteilen kleinbauend erstellten, hermetisch gekapselten Wellgetriebes. Allerdings werden hohe Ansprüche an die Dauerwechselbeanspruchbarkeit dieser sich ständig unter Last verformenden Manschette gestellt, und ihr Einbau in ein solches Wellgetriebe kleiner Abmessungen führt schon deshalb zu einer spürbaren Erhöhung des Fertigungsaufwandes, weil der unrunde Triebkern spielfrei in eine an sich runde Metallmanschette eingesetzt werden muß. Wohl wegen diesen gravierenden Nachteiles wurde bei der Weiterbildung des Wellgetriebes gemäß DE 1 97 33 497 A1 - mit seiner lückenlosen Folge von gegeneinander radial verlagerbaren Kreisringsektoren anstelle der in Umfangsrichtung voneinander distanzierten Stößel - auf solch eine metallene Gleitmanschette wieder verzichtet und statt dessen (Spalte 2, Zeilen 11) auf hohe Elastizität der Innenradnabe Wert gelegt, um bei der Montage hier den unrunden Triebkern möglichst leicht einstecken zu können. Das ist um so gravierender, wenn sich (gemäß Fig. 6 jener Vorveröffentlichung) zwei achsparallele konvexe Flächen, nämlich die Außenmantelfläche des Triebkernes und das Fußende des jeweiligen Innenrad-Sektors aufeinander abstützen, also eine fast nur noch linienförmige Lastaufnahme mit entsprechend steil ansteigender Flächenpressung auftritt. Nachteilig ist aber auch die zusätzlich zu erwartende Erwärmung aufgrund der ständigen Reibbewegung der benachbarten Sektoren aneinander. Die sodann erfolgte Weiterbildung gemäß der nicht vorveröffentlichten DE 1 98 33 290 C1 läßt insofern in der Abstützung der jetzt wieder speichenförmigen Innenrad-Stößel auf den Triebkern des Wellgenerators eine noch wesentlich verschlechterte thermischen Dauerstandfestigkeit befürchten, als die Füße der wieder zueinander distanzierten aber jetzt untereinander durch ein flexibles Ringband verbundenen Stößel nicht einmal mehr massiv, sondern gespalten sind, um durch elastisches Umbiegen eine radiale Federwirkung hervorzurufen. Man sieht also, daß die Fachwelt der thermischen Beanspruchung des Innenrades durch den Wellgenerator unterdessen nicht mehr die gebührende Beachtung schenkt.

Während es bei der zuletzt behandelten in Bezug auf die vorliegenden Hauptansprüche gattungsbildende EP 0 974 773 A2 um das elastische radiale Einspannen der Stößel zwischen Innenrad und Triebkern durch Federelemente an den Stirnenden der Stößel bzw. durch Zweikomponenten-Spritzgußteile mit wenigstens teilweise elastischem Werkstoff geht, bringt auch die DE 199 12 761 A1, die einen Stellantrieb aus Motor und Wellgetriebe zum Gegenstand hat, keinen spürbaren Fortschritt in Bezug auf das Erwärmungsproblem, wenn hinsichtlich erhöhter Lebensdaueranforderungen ein flexibles Innenrad aus Metall erörtert wird, um Verformungen während auch längeren Stillstands zu vermeiden - hinsichtlich der wirtschaftlichen Anforderungen aber dann doch gleich wieder dem Kunststoffmaterial der Vorrang eingeräumt wird. In Hinblick auf die oben schon angesprochene reibungsgünstige Paarung von Kunststoff auf Metall wird ein Wellgenerator mit metallenem Triebkern erwogen, dessen maximaler Durchmesser wie üblich wesentlich kleiner als der Durchmesser des radial verformbaren Innenrades ist, so daß die Verformungskraft vom Triebkern auf das Innenrad mittels speichenförmig radialer Stößel übertragen wird, die sich nun zum Innenrad hin für dessen gleichmäßige Verformung in dünnere Zweige auffächern. Dadurch sollen im Interesse guter Laufeigenschaften die Stößel einerseits an ihren Fußenden steif genug sein, um die radialen Bewegungen sicher vom Triebkern auf das Innenrad übertragen, und andererseits weich genug, um das außen verzahnte Innenrad gegen den innen verzahnten Stützring anschmiegend verformen zu können. Die Durchmesser der Stößel sind jeweils am Fußende ihrer Anlage gegen den Triebkern noch stärker, zu dort sogenannten Gleitschuhen, aufgeweitet, um größerflächig gegen die Außenmantelfläche des Triebkerns anzuliegen und dadurch eine möglichst ruckfreie Übertragung der Radialbewegung vom exzentrischen Triebkern auf das zu verformende Innenrad zu erlauben, was durch verjüngte Seitenbereiche dieser Gleitschuhe und durch Einbringen von Schmiermittel in den Abstand zwischen den Seitenbereichen peripher aufeinanderfolgender Gleitschuhe noch gefördert werde. Somit wird dort letztlich nur gelehrt, Reibungsprobleme dadurch in den Griff zu bekommen, daß die Fußenden der Stößel mit vergrößerten und geschmierten Querschnitten auf der Mantelfläche eines Triebkerns aus Metall oder Kunststoff ruhen.

Der Erfindung liegt deshalb die technische Problemstellung zugrunde, das an sich bewährte, sehr stark untersetzende Kunststoffgetriebe durch weitere Verringerung der Anzahl von zu montierenden verschleißanfälligen Einzelteilen noch funktionszuverlässiger und kleinerbauend ausgestalten zu können und dennoch, gerade auch in Hinblick auf das beschränkte Volumen, die reibungsbedingte Entwicklung von Verlustwärme weiter zu reduzieren, da sie über die Kunststoffteile nur schlecht abführbar ist.

Für die Lösung dieser Aufgabe wird von der Überlegung ausgegangen, daß bei den hier in Betracht gezogenen, im Kunststoff-Spritzguß erstellten kleinbauenden Getrieben die Funktion des radial verformbaren Innenrades - sei es nun integral oder aus Einzelteilen erstellt - im Radialschnitt sehr unterschiedliche, einander sogar widersprechende Materialeigenschaften erfordert. Denn der Abwälzvorgang auf dem Triebkern muß trotz reibungsbedingter Erwärmung dauerstandfest formstabil sein; für die umlaufende radiale Kraftübertragung sind elastisch gekoppelte aber in sich steife Rad-Speichen oder Stößel-Schäfte anzustreben, um den Montageaufwand und die Reibungserwärmung infolge eines zusätzlichen Käfigs oder infolge gegenseitiger seitlicher Abstützung loser sektorförmiger Stößel nach dem Stand der Technik vermeiden zu können; und für den Vorgang des Abwälzens des Reifens oder Flexbandes im Stützring ist hier lokal umlaufend ein radial elastisch nachgiebiges Einschmiegen in den konkaven Bogen mit dem größeren äußeren Radius wünschenswert.

Die Lösung wird erfindungsgemäß in einer Zwischenform zwischen dem vorbekannten einstückigen Innenrad aus Nabe, Speichen und Reifen einerseits und andererseits den unabhängig von einander in einem Käfig radial geführten separaten Stößeln und dabei vor allem in Kombination mit einer auch unter reibungsbedingter Erwärmung dauerslandfesten Auslegung der Stößel-Füße gesehen. So sind nun die einzelnen, insgesamt strahlen- oder sternförmig angeordneten Stößel zwar zur Lagepositionierung achsparallel peripher miteinander verbunden - aber nicht mehr starr als Speichen längs einer Nabe an ihren Füßen und längs eines Reifens an ihren Köpfen, sondern unter formstabiler Abstützung auf dem Triebkern des Wellgenerators etwa mittig durch peripher zu den beiderseits distanziert benachbarten Stößeln hin sich erstreckende flexible Arme. Die Stößel sind dabei jeweils mit dem Fußende ihres Schaftes angenähert radial auf der Außenmantelfläche des Wellgenerator-Triebkernes gleitfest (im Sinne von auch thermisch formstabil und gut gleitfähig) abgestützt, und sie können gegenüberliegend radial elastisch stauchbare Köpfe aufweisen, von denen nur diejenigen, die gerade in Verlängerung eines der größeren Radien des Wellgenerators liegen und deshalb aus einem gedachten Kreisbogen radial etwas nach außen verschoben sind, sich satt in die hohlzylindrische Innenmantelfläche der einander axial benachbarten Außenringe (Stützring und Abtriebsring) einschmiegen. Für ein formschlüssiges Abwälzen kann die Außenverzahnung des Innenrades unmittelbar auf der Außenmantelfläche der peripheren Folge distanziert einander benachbarten Stößel-Köpfe als unterbrochenem Radreifen ausgebildet sein; ober die Stößel-Köpfe dienen als Träger eines koaxial über sie aufgezogenen separaten Flexbandes mit Außenverzahnung.

Der Kopf eines jeden Stößels ist durch seine geometrische Formgebung und / oder infolge seiner Materialwahl in Längsrichtung des Schaftes gut elastisch verformbar. Dagegen ist gegenüberliegend das Fußende des Schaftes eines jeden Stößels wie schon erwähnt auch unter reibungsbedingter Erwärmung dauerstandfest ausgelegt, wofür es eine gleitfreudige, beispielsweise galvanisch aufgebrachte Beschichtung tragen oder / und mit einem Gleitstein aus hartem, temperaturfestem Werkstoff bestückt sein kann (der seinerseits wieder auf der freien Stirnfläche mit gegenüber der Mantelfläche des Triebkernes gleitbeständigem Material belegt sein kann).

Wenn der Schaft eines jeden Stößels querab nur zwei kurze biegsame Arme aufweist, die in Anschlußprofilen für gelenkige Kopplung mit den peripher benachbarten Armen von den beiderseits benachbarten Stößeln enden können, dann ist daraus ein Innenrad mit variabler Anzahl von Stößeln gruppierbar. Bevorzugt ist aber die Stößel-Anzahl fest vorgegeben. Dann sind die Arme entweder integral mit den beiderseits benachbarten Stößel-Schäften ausgebildet, nämlich biegsam an die Schäfte angespritzt; oder aber die Arme sind umlaufend zu einem flexiblen Haltering aus Kunststoff oder Federblech miteinander verbunden, der z.B. an konstruktiv dafür vorgegebenen Positionen mit den einzelnen Stößeln bestückt wird.

Um kostspielige und fehlerträchtige Montagearbeiten möglichst zu vermeiden, wird dieses strahlen- oder kranzförmige Gebilde aus relativ zueinander radial verlagerbaren, etwa mittig elastisch gekoppelten speichenförmigen Stößeln aber zweckmäßiger einstückig realisiert, nämlich in einem einzigen Verfahrensgang im Mehrkomponenten-Spritzguß, um den bereichsweise völlig unterschiedlichen Anforderungen an die Materialeigenschaften Rechnung tragen zu können. Insbesondere wird der Stößel-Kranz so in einem Spritzgußvorgang mit einem hochtemperaturbeständigen Fuß aus einem Material mit sehr guten Gleiteigenschaften, mit einem hochfesten, steifen Schaft zur radialen Kräfteübertragung nach außen und mit den hochelastischen Materialien für die angeformten Verbindungsarme zur gegenseitigen Verbindung der untereinander doch möglichst frei beweglichen Stößel sowie für den radial stauchbaren, ebenfalls gute Gleiteigenschaften aufweisenden Kopf erstellt. Ein Teil dieser einander widersprechenden Forderungen kann zwar auch durch aufeinander abgestimmt wechselnde Wandstärken angenähert werden, aber das ist unbefriedigend in Hinblick auf konstruktive Randbedingungen und führt zu Leistungsverlusten. Deshalb wird das Stößel-Innenrad gemäß diesem Aspekt der Erfindung im Mehrkomponentenverfahren in einem Spritzgußprozeß unter regionalem Einsatz konstruktiv bedingt unterschiedlicher Materialeigenschaften erstellt. Insbesondere wird dabei zunächst das feste Material für die Schäfte der Stößel eingebracht und dann unter deren Verbleib in der Form das elastischere Material für die biegeweichen Teilbereiche aufgespritzt. Dafür kann die Verbindung zwischen diesen unterschiedlichen Materialien sowohl formflüssig wie auch durch die haftenden Eigenschaften der zusammenzufügenden thermoplastischen Materialien ausgeführt werden. So können die sehr unterschiedlichen konstruktiven Anforderungen an das Einbauteil durch den Einsatz der sehr unterschiedlichen Materialien in einem Herstellungsgang und damit preisgünstig erfüllt werden. Neben der Herstellung aus mehreren (vorzugsweise aus zwei) unterschiedlichen thermoplastischen Kunststoffen ist im Rahmen vorliegender Erfindung aber auch der in der Kuststoff-Fertigungstechnik als solcher vertraute Einsatz von Insertteilen anderer z.B. wärmeformbeständiger Materialien insbesondere für die Fußenden der Stößel-Schäfte möglich.

Bezüglich weiterer Einzelheiten und zusätzlicher Weiterbildungen der Erfindung wird auf die nachstehende Beschreibung eines bevorzugten Realisierungsbeispiels zur erfindungsgemäßen Lösung und auf die nachfolgenden Ansprüche sowie ergänzend auf unsere beiden heutigen Parallelanmeldungen unter gleicher Bezeichnung verwiesen. In der Zeichnung zeigt :
- Fig.1: einen Mehrkomponenten-Stößelkranz, eingebaut in den Stützring eines Wellgetriebes,
- Fig.2: als Ausschnitt aus dem Stößel-Kranz gemäß Fig.1 einen Stößel in Stirnansicht und
- Fig.3: den Stößel gemäß Fig.2 im Längsschnitt.

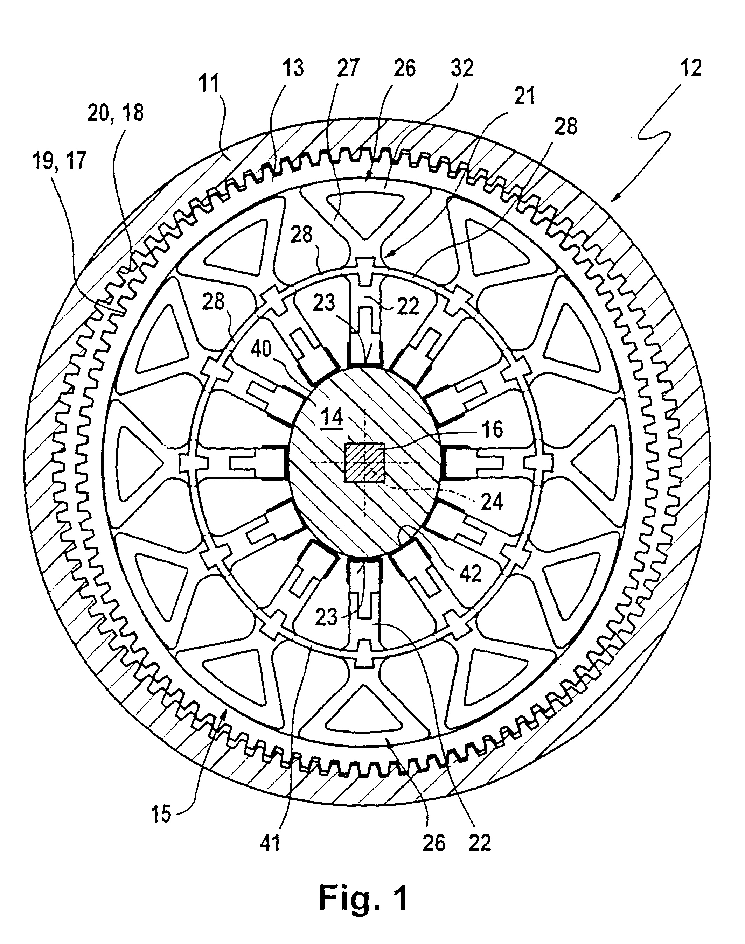

Fig.1 der Zeichnung stellt angenähert maßstabsgerecht vergrößert aber unter Beschränkung auf das Funktionswesentliche und bei sehr vergröbert skizzierter Verzahnung eine Stirnansicht gegen ein erfindungsgemäß ausgestaltetes Innenrad 15 eines Wellgetriebes 12 innerhalb seines stationären Stützringes 11 dar. In diesem Beispielsfalle ist das Innenrad 15 aus einer Anzahl untereinander gleicher Stößel 21 erstellt, die mittels eines Halteringes 41 zu einem einstückig handhabbaren Kranz verbunden sind. Das Innenrad 15 ist koaxial von einem formstabilen Wellgenerator 14 durchsetzt. In den üblicherweise im Querschnitt wie gezeigt ovalen, gegenüber dem Innenring 15 konzentrisch verdrehbaren Triebkern des Wellgenerators 14 seinerseits greift wieder koaxial aber nun drehfest eine Antriebswelle 16 ein, bei der es sich unmittelbar um die verlängerte Motorwelle einer Antriebseinrichtung handeln kann (in der Darstellung nicht sichtbar, etwa als Elektro- oder Fluidmotor konzentrisch über der Zeichenebene gelegen).

Das vom Wellgenerator 14 umlaufend im Axial-Querschnitt unrund verformte Innenrad 15 verbringt nur in Verlängerung der größeren Radien des Wellgenerators 14 längs des dort hinreichend weit radial nach außen verlagerten Bogenstückes 32 seiner Außenmantelfläche 17 ein Flexband 13 kraft- oder wie skizziert über eine radiale Verzahnung 19 / 20 formschlüssig mit der formstabil hohlzylindrischen Innenmantelfläche 18 des stationären äußeren Stützringes 11 in Drehverbindung. Das Innenrad 15 samt Wellgenerator 14 erstreckt sich axial unter der Zeichenebene noch in einen weiteren, dem in der Zeichnung sichtbaren Stützring 11 axial benachbarten Außenring hinein, der nun aber nicht stationär angeordnet sondern als koaxialer Abtriebsring dieses sehr stark untersetzenden Getriebes 12 von der Außen-Verzahnung 19 des Innenrades 15 mitdrehbar gelagert ist.

Dieses axial lange und radial breite, radial verformbare Innenrad 15 ist aus einer Anzahl untereinander gleicher, strahlenförmig nebeneinanderliegend beweglich miteinander verbundener einzelner Stößel 21 zusammengefügt. Jeder dieser etwa T-förmigen Stößel 21 besteht vor allem aus einem quaderförmigen, sich etwa über die axiale Länge des Wellgenerators 14 erstreckenden Schaft 22, der sich mit seinem Fuß 23 längs der Erzeugenden - und in Bezug auf die Geräte-Achse 24 radial - auf der im Querschnitt unrunden Mantelfläche 40 des Wellgenerators 14 abstützt. Dem freien Stirnende des Fußes 23 gegenüber endet jeder Schaft 22 in einem diesem gegenüber vor allem radial elastisch stauchbaren Kopf 26. Der hat im wesentlichen die Querschnittsform eines sich achsparallel über die Länge des Wellgenerators 14 und damit die achsparallele Länge des Schaftes 22 erstreckenden Hohlzylinder-Ausschnittes mit biegeweichen Übergängen an den Enden seiner dem Fuß 23 des Schaftes 22 gegenüberliegend an diesen sich anschließenden sektoriellen Seitenwände 27. Diese werden federnd etwas peripher gespreizt, wenn eine dieses radiale Wandungspaar 27-27 stirnseitig verbindende Bogenwand 32 des Kopfes 26 infolge Anlage gegen den Außenring 11 radial etwas gestaucht (nämlich abgeflacht) wird, so daß die Verzahnung 19 /20 hier desto zuverlässiger in Eingriff gerät. Ein in der Hauptebene des Innenrades 15 und somit quer zur Richtung der Geräte-Achse 24 sich erstreckende filmförmige Wand 43, die den Freiraum des Kopfes 26 zwischen den Wänden 27-36-27 mehr oder weniger weit überspannt, bewirkt eine konstruktiv einstellbare Versteifung des grundsätzlich radial elastischen Kopfes 26.

Die seitliche Positionierung der im Prinzip gegeneinander möglichst frei beweglichen, einander peripher (also in Umfangsrichtung des Innenrades 15) benachbarten Stößel 21 in ihrer seitlichen Aufeinanderfolge und damit zugleich deren in der Stirnansicht kreis- oder im Axial-Querschnitt kranzförmige Positionierung und Verbindung zum einteiligen Innenrad 15 erfolgt mittels seitlich einander gegenüber an den Schaft 22 vorzugsweise einstükkig elastisch angeformter kurzer Arme 28 - 28, deren Aufeinanderfolge sich zu einem Haltering 41 schließt. Die jeweils zwischen zwei einander benachbarten Stößel-Schäften 22 zusammenstoßenden Arme 28 - 28 können gelenkig miteinander verbunden sein, um aus dem zunächst losen Verbund einer größeren Anzahl von dann kettengliedförmig aneinandergelenkten Stößeln 21 ein in der Axialquerschnittsebene in Grenzen verformbares Innenrad 15 zu gruppieren. Dessen Umfang läßt sich also in gewissem Maße zur Anpassung an den Durchmesser der Innenmantelfläche 18 eines vorgegebenen Stützringes 11 durch die Anzahl miteinander zum Innenrad 15 verbundener Stößel 21 variieren. Daß dabei der Außenbogen des Stößel-Kopfes 23 nicht immer auf einem zu jener Innenmantelfläche 18 konzentrischen Bogen liegt, stört nicht, da im Bereich des Verzahnungseingriffes 19-20 der Kopf 26 ja unter Verformung seiner stirnseitigen Bogenwand 32 unter Zwischenlage des Radreifens (Flexbandes 13) radial in die Innenmantelfläche 18 des Stützringes 11 hineingedrückt wird und dadurch stets guten Mitnahmeschluß erbringt

Noch einfacher und fertigungstechnisch noch günstiger automatisierbar gestaltet sich eine integrale biegsame Verbindung zwischen den einander benachbarten Stößeln 21 zum einteiligen Innenring 15 aus Stößeln 21 und Haltering 41. Dafür ist jeder Stößel 21 beiderseits mit einem an den jeweils benachbarten Stößel 21 direkt angeschossenen Arm 28 ausgestattet. Wie aus Fig.1 ersichtlich, kann aber auch vorgesehen sein, die Stößel 21 anstelle durch angeformte Arme durch einen elastischen Ring 41 als Kunststoff oder aus Federstahl miteinander zu verbinden. Zweckmäßigerweise werden die einzelnen Stößel 21 wie aus Fig.1 ersichtlich abwechselnd in der einen und in der entgegengesetzten axialen Richtung auf den peripher verbindenden Haltering 41 kraft- und formschlüssig aufgesetzt.

Dem elastischen Kopf 26 gegenüber ist jeder Stößel 21 mit einem auch unter Wärmeeinwirkung formstabilen Fuß 23 ausgestattet, der vorzugsweise im Mehrkomponenten-Spritzguß aus besonders hitzebeständigem Material unter formschlüssiger Schwalbenschwanz-, Nut-Feder- oder dergleichen Profilierung an das radial innere Stirnende des Schaftes 22 angegossen ist. Statt dessen oder zusätzlich kann eine verschleißfeste, etwa galvanisch aufgebrachte Beschichtung 42 für das innere Stirnende des Schaftes 22 oder des angespritzten Fußes 23 vorgesehen sein.

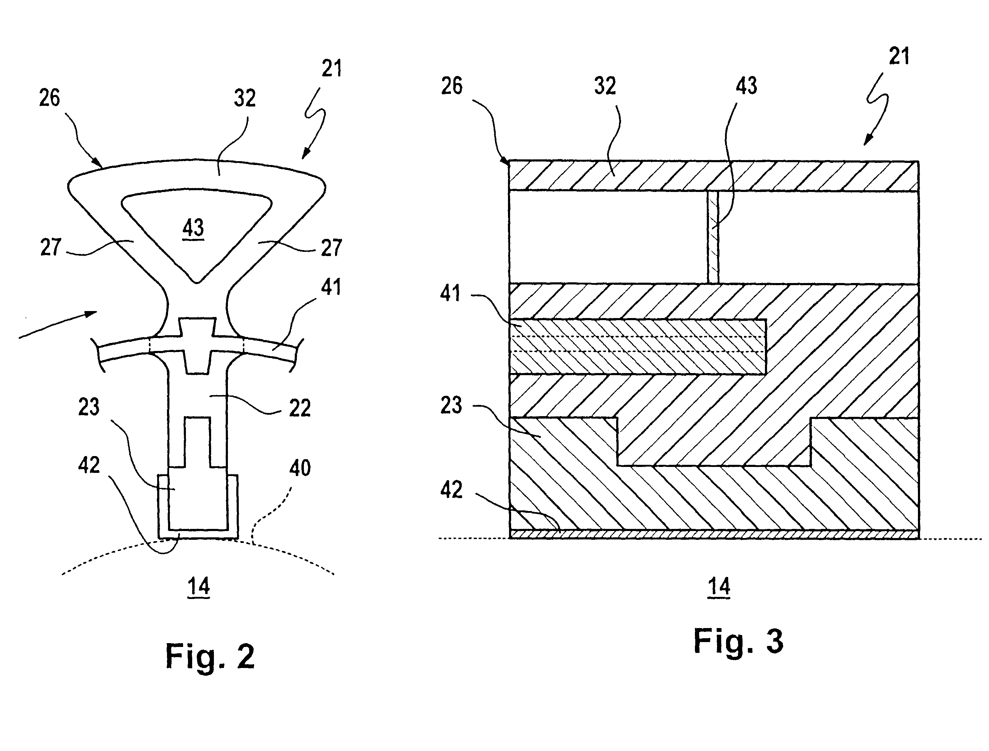

Aus der vergrößerten Ausschnitt-Darstellung gemäß Fig.2 ergibt sich wieder der vorstehend unter Bezugnahme auf Fig.1 schon erläuterte Aufbau in Bezug auf die Stößel 21. Die zugehörige Axialschnittdarstellung gemäß Fig.3 macht ersichtlich, daß der aus elastischem Kunststoff angespritzte oder aus Federstahlband zur Aufnahme einzelner Stößel 21 geformte Haltering 41 sich nicht über die gesamte axiale Länge durch den Schaft 22 des Stöβels 21 hindurch erstrecken muß. Zum Momentenausgleich im Interesse ruhigen Laufes ist es dann aber zweckmäßig, den Haltering 41 mit einer geradzahligen Menge von Stößeln 21 abwechselnd von beiden Seiten des Halteringes 41 achsparallel zu bestücken.

Jedenfalls besteht das sternförmige Innenrad 15 eines Wellgetriebes 12 aus einzelnen Stößeln 21, die mittels eines in etwa halber Höhe des Stößel-Schaftes 22 umlaufenden Halteringes 41 zu einem einzigen handhabbaren Teil gegeneinander beweglich miteinander verbunden sind. Einem radial elastisch stauchbaren Kopf 26 gegenüber ist das innere, wärmeformbeständig ausgelegte Stirnende des Stößel-Schaftes 22 mit einem Gleitschuh (Fuß 23) ausgestattet oder wenigstens gleitfest beschichtet. Das Innenrad 15 ist als einteiliges Kunststoff-Spritzgußteil im Mehrkomponentenverfahren mit wärmeformbeständigem Fuß 23 und mit am jeweiligen formstabilen und hochfesten Stößel-Schaft 22 elastisch angeformten Haltering-Armen 28 sowie Kopfwänden 27, 32 aus unterschiedlichen thermoplastischen Kunststoffen erstellt.

## Patentansprüche

1. Wellgetriebe (12) mit einem darin um eine Achse (24) verdrehbar angeordneten, unrunden Triebkern als Wellgenerator (14) und mit einem von Stößeln (21) koaxial umlaufend radial verformbaren Innenrad (15) bei gleitfördernder Ausbildung einer radialen Abstützung der Stößel (21) gegen den Wellgenerator (14), wobei die Stößel (21) jeweils an ihrem sich zwischen Fuß (23) und Kopf (26) erstreckenden Schaft (22) über biegeweiche Arme (28 - 28) beweglich miteinander peripher verbunden sind, **dadurch gekennzeichnet, daß** die Stößel (21) an ihrem jeweiligen Fuß (23) thermisch formstabil und in Bezug auf die Wellgenerator-Mantelfläche (40) gut gleitfähig beschichtet (40) oder bestückt sind und daß die Köpfe (26) Innenräume aufweisen, die jeweils wenigstens teilweise quer zur Achse (24) von einer Filmwand (43) überspannt sind.

2. Wellgetriebe nach dem vorangehenden Anspruch, **dadurch gekennzeichnet, daß** die Folge der Arme (28) als umlaufender Haltering (41) für die Stößel (21) ausgelegt ist.

3. Wellgetriebe nach einem der vorangehenden Ansprüche, **dadurch gekennzeichnet, daß** die Stößel (21) jeweils auf steifem hochfestem Schaft (22) einen radial und peripher elastisch verformbaren Kopf (26) tragen, der als achsparalleler Hohlzylinder-Sektor mit biegeweich an den Schaft (22) anschießenden Seitenwänden (27-27) ausgebildet ist, die von einer Bogenwand (32) überbrückt sind.

## Claims

1. A harmonic drive (12), having a non-round drive core which is rotatable around an axis (24) arranged therein as a wave generator (14), and an internal geared wheel (15), revolvingly coaxially radially deformable by tappets (21), having low-friction implementation of a radial support of the tappets (21) against the wave generator (14), with the tappets (21) being movably connected to one another peripherally via flexible arms (28-28) connected to their shafts (22), **characterized in that** the tappets (21) are dimensionally stable under heat at the respective feet (23) of their shafts (22) and are tipped or coated to be low-friction in relation to the wave generator lateral surface (40), and that the heads (26) have insides which have a film wall (43) stretched at least partially over them transverse to the device axis (24).

2. The harmonic drive according to the preceding claim, **characterized in that** the sequence of the arms (28) is laid out as a continuous holding ring (41) for the tappets (21).

3. The harmonic drive according to one of the preceding claims,
**characterized in that** the tappets (21) each carry a radially and peripherally elastically deformable head (26) on the stiff, high-strength shafts (22), which is implemented as a hollow cylindrical sector parallel to the axis having side walls (27-27), flexibly adjoining the shaft (22), which are bridged by a curved wall (32).

## Revendications

1. Démultiplicateur harmonique (12) avec un noyau d'activation non circulaire disposé à l'intérieur avec possibilité de rotation autour d'un axe (24) et servant de générateur d'harmoniques (14) et avec une roue intérieure (15) pouvant être déformée de façon coaxiale dans le sens radial sur sa circonférence par des poussoirs (21) avec un appui radial des poussoirs (21) contre le générateur d'harmoniques (14) facilitant le glissement, les poussoirs (21) étant reliés entre eux sur leur périphérie de façon mobile au niveau de leur corps (22) s'étendant entre leurs pieds (23) et leurs têtes (26) par des bras (28-28) flexibles, **caractérisé en ce que** les poussoirs (21) sont revêtus (40) ou garnis au niveau de leur pied (23) de façon à assurer leur stabilité thermique de forme et leur bon glissement par rapport à la surface d'enveloppe (40) du générateur d'harmoniques et les têtes (26) présentent des espaces intérieurs tendus au moins partiellement d'une cloison en film (43) perpendiculairement à l'axe (24).

2. Démultiplicateur harmonique selon la revendication précédente, **caractérisé en ce que** la succession de bras (28) est conformée comme un anneau de maintien continu (41) pour les poussoirs (21).

3. Démultiplicateur harmonique selon l'une quelconque des revendications précédentes, **caractérisé en ce que** les poussoirs (21) portent chacun sur un corps (22) rigide et très solide une tête (26) déformable de façon élastique dans le sens radial et périphérique, qui est conformée comme un secteur de cylindre creux parallèle à l'axe avec des parois latérales (27-27) se raccordant de façon flexible au corps (22), et traversée par une cloison en arc de cercle (32).
